# EUROPEAN PATENT APPLICATION

(11) **EP 1 081 199 A1**
(43) Date of publication of application: **07.03.2001**
(21) Application number: 99202869.6
(22) Date of filing: 06.09.1999
(51) Int. Cl.: C09D 157/04

(54) **Composition**

(71) Applicant: DSM N.V., 6411 TE Heerlen (NL)
(72) Inventor: Van den Berg Jeths, Robert, 7323 MB Apeldoorn (NL); Van Rossum, Cornelis Albertus Joannes Joseph, 8016 CH Zwole (NL); Pons, Dick Adriaan, 8015 CD Zwolle (NL); Van der Rijst, Bernard Lambert Wijnand, 8011 NS Zwolle (NL)

(57) **Abstract**

The invention relates to a substantially BADGE-free paint composition which comprises
a) a carboxyl functional polymer comprising ethylenically unsaturated mono- or dicarboxylic acid units having an acid value of at least 30 mg KOH/gram resin, and a glass transition temperature (Tg) between -50°C and 120°C
b) a crosslinker
c) a catalyst and
d) an organic solvent or water.

## Description

The present invention relates to a paint composition which can be applied to coat the inside of a can.

Coating compositions for the inside of beer, beverage and food cans must be approved for direct food contact. A fundamental function of the inside coatings on cans is to protect the packed product to maintain its nutritional value, texture, color and flavor when purchased and used by the consumer. To meet these requirements, the organic film must be free of any material which might extract into the packed product and must maintain its integrity over the product recommended shelf life. The ingredients in the can must not make contact with the metal surface. On the whole, current commercial coating compositions for cans and ends, have met all these performance criteria.Another function of a can coating can be decorative function.

Many coating compositions comprise epoxy resins which are manufactured form bisphenol A and epichlorohidrin and which contain some amount of bisphenol A diglycidyl ether (BADGE).

Even higher molecular weight solid epoxy resins, as normally used in the manufacture of inner lacquers for food cans, have residual levels of BADGE. The vast majority of these BADGE-units will either react with the hardenere during the lacquer curing process, thereby becoming chemically bound into the cured film, or volatilize on stoving. Coatings based on higher molecular weight, solid epoxy resins and suitable crosslinking agents do not give high residual BADGE levels in properly cured films. However,the level of residual BADGE remaining in the final food can coating, potentially available to migrate into food, is determined by a multiplicity of factors, such as the type of epoxy resins used, lacquer formulation, film weight, curing conditions, can type and size, nature of food packed and pst processing of the can once filled.

Liquid epoxy resins containing high levels of BADGE can technically also be used in other non-epoxy based coatings (e.g. PVC organosols) as processing aids and performance enhancers. Because, on the basis of recent investigations into the migration of BADGE into food and food simulants from such coatings, relatively high levels of BADGE are thought to possibly migrate into fatty food, industry is urgently reviewing the use of BADGE containing materials in such coatings, particularly for use in contact with fatty foods.

It is the object of the present invention to provide a resin composition which reduces the BADGE content of cured can coatings as much as possible and which results in a coating having the required characteristics.

The invention is characterized in that the substantially BADGE-free paint composition comprises
a) a carboxyl functional polymer comprising ethylenically unsaturated mono- or dicarboxylic acid units having an acid value of at least 30 mg KOH/gram resin, and a glass transition temperature (Tg) between -50°C and 120°C
b) a crosslinker
c) a catalyst and
d) an organic solvent or water

The acid value of the polymer is lower than 300 and is more preferably between 50 and 100 mg KOH/gram resin.

The solid content of the paint composition is between 30% and 80% and more preferably between 50% and 60%.

The resin composition according to the invention results in a coating composition having no BADGE units. The coating also meet the requirements relating to, for example, sterilization and pasteurization properties, flexibility , the approval for food applications of the binder compositions and good adhesion on the substrate.

Suitable ethylenically unsaturated mono- or dicarboxylic acid derivatives include, for example, esters of (C₃-C₆) monoethylenically unsaturated monocarboxylic acids, such as for example (meth)acrylic acid and crotonic acid, and (C₄-C₆) monoethylenically unsaturated dicarboxylic acids such as, for example, maleic acid, maleic anhydride, itaconic acid and fumaric acid.

(Meth)acrylic acid ester is preferred.

Suitable (meth)acrylic acid derivatives include, for example, (meth)acrylic acid, methyl (meth)acrylate, ethyl (meth)acrylate, butyl (meth)acrylate, propyl (meth)acrylate, 2-ethylhexyl (meth)acrylate, cyclohexyl (meth)acrylate, decyl (meth)acrylate, isodecyl (meth)acrylate, benzyl (meth)acrylate and hydroxyalkyl (meth)acrylates such as hydroxyethyl and hydroxypropyl (meth)acrylate and/or glycidyl esters or glycidyl ethers of alkyl (meth)acrylates.

Most preferably styrene-acrylate is used as component a).

The carboxylic functional polymer can also contain other reactive functional groups.

Examples of these functional groups are epoxy groups, anhydride groups, hydroxyl groups, acetoacetonate groups, acrylamide groups and combinations thereof.

The molecular weight (Mn) of the polymer is usually higher than 3000 and is preferably higher than 5000.

The polymer has to be cured with a crosslinker.

Suitable crosslinkers include, for example, phenolic based crosslinkers, amino resins and/or urea resins.

Epoxyfunctional crosslinkers , such as for example epoxidised linseed oil, epoxydised soybean oil and epoxy novolac, can be applied as co-crosslinkers

Preferably, the resin composition comprises a phenolic based crosslinker.

Suitable phenolic resins are for example curalble unplasticized phenolic resin ( Uravar SFC 112™),phenolic resole resin (Epikure DX-200-N-60™), (n-butylated phenolic resin (Uravar FB209 57 BT™), non-etherified phenolic resin (Uravar FB 190™)and comparative products such as for example Uravar FN1™, Bakelite LB 7700™ and SFC 110™,

The weight ratio polymer crosslinker is generally between 95:5 and 50:50 (based on solid resin). The ratio can be selected depending on the desired use. If desired, it is also possible to apply a mixture of crosslinkers.

Examples of suitable catalysts for curing the carboxyl functional polymer and the crosslinker are Additol XK406™, Nacure 2500™, phosphoric acid, dinonylnaphtalene disulfonic acid, para toluene sulphonic acid and potassium hydroxyde. The catalysts can generally be applied in amounts between 0.01% and 10% by weight and preferably between 0.5 and 5% by weight relative to solid resin.

Suitable diluents or solvents for the acrylic resin and/or phenol resin include but are not limited to ketones, esters, ethers, such as glycoethers, alcohols, hydrocarbons, especially aromatic hydrocarbons or a mixture thereof. Selection of the diluents/solvents depends upon the viscosity of the resin blend without a diluent or solvent and the desired viscosity and solids content of the paint composition. One may use a diluent or solvent for either the acrylic resin or the phenol resin component, or both. It is preferred that both resins be dispersed or dissolved in an appropriate diluent/solvent for ease of application and to ensure that the composition is homogeneously blended. Preferably, the diluents/solvents used are compatible with each other and provide adequate dispersion/dissolution of the components in the coating composition. Suitable solvents include for example hydrocarbons, especially aromatic hydrocarbons; ethers, especially glycoethers and other equivalent ethers and various esters. If desired, the acrylic resin and or the phenol resin, if amenable to doing so, may be subject to a precondensation step to improve their compatibility and reduce porosity. This can be accomplished by mixing the resin or resins with a suitable solvent/diluent and a catalyst, such as for example an acid catalyst and allowing the resin(s) to partially react or prepolymerize before use. In doing so, however one needs to ensure that the solids content of the coating is kept within the desired range and that other desired characteristics of the coating are not adversely affected. Further conventional components of the coating are additives such as for example lubricants for example lanolin, polyethylene wax and other waxes; pigments or fillers (for example aluminium; iron oxide or carbon black).

Examples of suitable organic solvents include aromatic hydrocarbon resins (for example the 'Solvesso' types), N-methylpyrolidone, xylene, propylene glycol monomethylether, methylpropylene glycol acetate, dibasic ester, isophoron, ethyl ethoxypropionate, ethylene-propylene glycol acetate and/or butyl glycol. The amount of solvent depends of the desired viscosity and ranges generally between 5 and 90%.

Can coatings can be obtained via processes of the kind described in for example 'Organic Coatings - Science and Technology, Volume 2: Applications, Properties and Performance' by Z.W. Wicks et al. (Wiley-Interscience, 1994, pp. 284-290).

The curing conditions and additives can be selected to depend on the desired application and the nature and thickness of the substrate. The curing time will generally lie between a few seconds and tens of minutes at temperatures between about 150°C and about 250°C.

Suitable substrates include for example steel, tin-plated steel (ETP, Electrolytic Tin Plate), chromium-plated steel (ECCS, Electrolytic Chromium-Chromium oxide Steel) and aluminium.

The coatings according to the invention are suitable for use as interior and exterior coatings and can be used for example as coatings for food cans, beer cans, cans for other beverages ('2 and 3 piece'), spray cans, can ends, tubes, drums, cigar boxes and fish cans (the so-called 'drawn-redrawn (DRD)', 'draw-wall ironed (DWI)' cans).

The interior coating is mainly intended on the one hand to protect the contents of the can against the influences of the metal and on the other to protect the metal against the contents of the can.

The type of monomers to be used to prepare the polymer, the crosslinker , the catalyst and the curing conditions can be chosen to depend on the desired use.

The systems according to the invention can be used in pigmented an in unpigmented compositions.

If so desired, the usual additives such as pigments, fillers, stabilisers, dispersing agents, waxes,flow-promoting agents and defoaming agents can be added to the system according to the invention.

The resin composition according to the invention also yields good results in coil coating applications in which the desired layer thickness generally is different and in which the conditions differ in the curing of a can coating composition.

Coil coatings can be obtained via commonly known processes as described for example in 'Coil Coatings' by Joseph E. Gaske (Federation of Societies for Coatings Technology, February 1987, pp. 7-19).

The curing conditions and additives can be chosen to depend on the desired peak metal temperature (PMT) and the nature and thickness of the substrate. The curing time will generally be between about 20 and about 70 seconds at temperatures between about 250°C and about 400°C and a PMT between 204°C and 249°C.

Suitable substrates include for example steel, tin-plated steel and aluminium.

The coil coatings according to the invention are suitable for use as primer and as top coat and can for example be used as coating for household equipment such as fridges, deepfreezes, microwave ovens, ovens and boilers, as coating for caravans and as coating for facade cladding.

The invention will be elucidated with reference to the following, non-limiting examples.

### Experiment I

### Preparation of an acrylic resin

543 parts by weight Solvesso 150™ were added to a reactor and heated to 135°C.Next a monomer mixture consisting of 470 parts by weight of styrene, 895 parts by weight of n-butyl acrylate, 135 parts by weight of acrylic acid and 30 parts by weight of di-tert-butylperoxide was added to the reactor in three hours. Half a hour after adding the monomers 2 parts by weight of di-tert-butylperoxide was gradually added. One hour after adding the monomers 2 parts by weight of di-tert-butylperoxide was gradually added. One and a half hour after adding the monomers 2 parts by weight of di-tert-butylperoxide was gradually added. Two hours after adding the monomers 2.5 parts by weight of di-tert-butylperoxide were gradually added. After the last addition of peroxide the mixture the mixture was cooled down and diluted with 457 parts by weight of n-butanol and 600 parts by weight of Solvesso 150™.

The acid number of the solid resin was 70 mg KOH/gram.

The viscosity measured in a Physica Viscolab LC3 at 23°C was 650 dPa.s.

The molecular weight (Mn) was 7957 gram/mol, (determined with the aid of gel permeation chromatography using a polystyrene standard).

### Examples I-II

The resin according to Experiment I was mixed with catalyst,crosslinker and solvent as indicated in Table I. These BADGE-free paint formulations were cured according to the conditions indicated in Table I.

**Table I**

| | I | II |
|---|---|---|
| Acrylic resin experiment I | 70.8 | 70.8 |
| SFC 112™ | 11.5 | 11.5 |
| Additol XK 406™ | 0.5 | 0.5 |
| epoxidized linseed oil | 2.5 | 2.5 |
| Thinner | 40 | 40 |
| Cure time | 15 min. | 24 sec. |
| Cure temp. | 205°C | 240°C |
| Substrate | ETP | Alu |
| Solvent resistance¹⁾ | 60 | 70 |
| Film thickness (ISO 2360) | 5-6µ | 5-6µ |
| Stampability DSM cup²⁾ | 4/4- | 5-/4 |
| Erichsen first cupping³⁾ | 5/5 | 5/5 |
| Erichsen second cupping³⁾ | 5/5 | 5/5- |
| Wedgebend % ⁴⁾ | 85% | 60% |
| Sterilisation⁵⁾ : | | |
| Tapwater | 5/5 | 4/4 |
| Lactic acid 2% | 3/3 | |
| Acetic acid 2% | 5/5 | 4/2 |
| Citric acid 2% | 5/5 | 5/3 |
| Tartaric acid 2% | 5/5 | |
| NaCl 3% | 5/5 | |
| Lactic acid 2% / NaCl 3% | 3/2 | |
| Acetic acid 2% / NaCl 3% | 4/3 | |
| Citric acid 2% / NaCl 3% | 5/5 | |
| Sulfur staining | 5/5 | |
| NaOH 0.1% | 5/3 | |
| Adhesion (DIN 53151) | GT0 | |

1) The solvent resistance test is done by counting the number of dubble rubs (forwards and back) necessary to remove the coating down to the metal. Rubbing is carried out with a piece of cotton wool-soaked in a solvent (methyl ethyl ketone). The result is reported as a number of dubble rubs from 0-100 (numbers above 100 are all reported as > 100).
2) The DSM cup flexibility evaluates the ability of the coating to withstand stamping operations that form a coated flat panel into a DSMR cup. The judgement of the visual inspection on coating defects is as follows:
   1 = very bad
   2 = bad
   3 = moderate
   4 = good
   5 = very good
3) The Erichsen flexibility test evaluates the flexibility of a coating by means of a slow deformation. By means of a slow drawing of a cup from a flat sheet an indication is obtained on how the coating will perform during forming operations in practice.
   The judgement is as follows:
   1. very bad = total delamination
   2. bad = delamination till the top
   3. moderate = half of the drawing cup is delaminated
   4. good = slight delamination only on the edges max. 2mm
   5. very good = no coating defects.
4) The wedge bend test is conducted to determine the flexibility. A cooled panel (100 mm by 40 mm) is bent over a 6 mm cylindrical mandrel. The folded panel thus produced is then impacted (4,5 Nm) in a device (the wedgebend tester) to form a wedge-shaped contour, flat at one end and 6 mm diameter at the other end. This test piece is then immersed in acidified 3% hydrochloric acid saturated copper sulphate solution for 4 minutes in order to stain any cracks in the coating. The distance in millimeters, which is crackfree is measured. The percentage crackfree is recorded. The higher the % crackfree, the higher the flexibility.
5) Sterilisation test

Formed cans are placed into a sterilizer at a temperature of 129°C for 1 hour in the presence of water and then withdrawn and observed.

Water absorption and blister formation were evaluated. For the judgement we refer to 2).

## Claims

1. Substantially bisphenol-A-diglycidylether-free paint composition comprising
a) a carboxyl functional polymer comprising ethylenically unsaturated mono- or dicarboxylic acid units having an acid value of at least 30 mg KOH/gram resin, and a glass transition temperature (Tg) between -50°C and 120°C
b) a crosslinker
c) a catalyst and
d) an organic solvent or water

2. Composition according to Claim 1, characterized in that the ethylenically unsaturated mono- or dicarboxylic acid derivative is an ester of a (C₃-C₆) monoethylenically unsaturated monocarboxylic acid or a (C₄-C₆) monoethylenically unsaturated dicarboxylic acid.

3. Composition according to Claim 2, characterized in that the monocarboxylic acid is (meth)acrylic acid or crotonic acid and the dicarboxylic acid is maleic acid, maleic anhydride, itaconic acid or fumaric acid.

4. Composition according to any one of Claims 1-3, characterized in that component a) is styrene-acrylate.

5. Composition according to any one of Claims 1-4, characterized in that the crosslinker is a phenolic based resin, an amino resin or an urea resin.

6. Composition according to any one of Claims 1-5, characterized in that the organic solvent is an aromatic hydrocarbon resin, N-methylpyrolidone, xylene, propylene glycol monomethylether, methylpropylene glycol acetate, dibasic ester, isophoron, ethyl ethoxypropionate, ethylene-propylene glycol acetate and/or butyl glycol.

7. A can coating composition comprising a composition according to any one of Claims 1-6, and optionally other additives.

8. A coil coating composition comprising a composition according to any one of Claims 1-6 and optionally other additives.

9. Entirely or partly coated substrate, wherein the coating is obtained from a composition according to any one of Claims 7-8.
